(19) Europäisches Patentamt
European Patent Office
Office européen des brevets

(11) **EP 4 708 666 A1**

(12) **EUROPÄISCHE PATENTANMELDUNG**

(43) Veröffentlichungstag:
**11.03.2026   Patentblatt 2026/11**

(21) Anmeldenummer: 25191273.9

(22) Anmeldetag: **23.07.2025**

(51) Internationale Patentklassifikation (IPC):
**H02P 3/22** (2006.01)   **G01R 19/00** (2006.01)
**H02H 3/13** (2006.01)   **H02H 7/10** (2006.01)
**B64C 13/50** (2006.01)

(52) Gemeinsame Patentklassifikation (CPC):
**H02P 3/22; H02H 3/13; H02H 7/10;** B64C 13/50;
B64D 2045/0085

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **04.09.2024   DE 102024125264**

(71) Anmelder: **Liebherr-Aerospace Lindenberg
GmbH
88161 Lindenberg (DE)**

(72) Erfinder:
• **IMMLER, Thomas
88138 Sigmarszell (DE)**
• **SCHILLING, Christian
88167 Maierhöfen (DE)**
• **KINZELMANN, Julian
88138 Hergensweiler (DE)**

(74) Vertreter: **Lorenz Seidler Gossel Part. mbB
Widenmayerstr. 23
80538 München (DE)**

(54) **MESSEN EINER DÄMPFUNGSFUNKTION EINES DÄMPFERS EINES ELEKTROMECHANISCHEN AKTUATORS ODER ANTRIEBSSYSTEMS**

(57)    Die vorliegende Erfindung betrifft ein Verfahren zum Messen einer Dämpfungsfunktion, vorzugsweise eines Dämpfers eines elektromechanischen Aktuators oder Antriebssystems, sowie einen Aktuator oder ein Antriebssystem mit einer Steuereinheit, welche dazu ausgelegt ist, ein erfindungsgemäßes Verfahren auszuführen.

Fig 3

**Beschreibung**

Die vorliegende Erfindung betrifft ein Verfahren zur Messung einer Dämpfungsfunktion, vorzugsweise eines Dämpfers eines elektromechanischen Aktuators oder Antriebssystems sowie einen Aktuator oder ein Antriebssystem mit einer Steuereinheit, welche dazu ausgelegt ist, ein erfindungsgemäßes Verfahren auszuführen.

Bei herkömmlichen Aktuatoren oder Antriebssystem mit einem Dämpfer ist zur Messung bzw. Überprüfung der Dämpfungsfunktion zusätzliche, spezialisierte Hardware, beispielsweise in Form einer bestimmten Elektronik oder Sensorik vorhanden.

Dies führt zu erheblichen konstruktiven Mehraufwand.

Der vorliegenden Erfindung liegt die Aufgabe zugrunde, eine vereinfachte Möglichkeit zur Überprüfung bzw. Messung einer Dämpfungsfunktion zu bieten.

Diese Aufgabe wird durch die Gegenstände der unabhängigen Ansprüche gelöst. Vorteilhafte Weiterbildungen der Erfindung sind Gegenstand der Unteransprüche.

Demnach ist ein Verfahren zur Messung einer Dämpfungsfunktion, vorzugsweise eines Dämpfers eines elektromechanischen Aktuators oder Antriebssystems, vorgesehen, mit den Schritten:

- Aktives Beschleunigen eines Motors auf eine definierte Geschwindigkeit n,
- Aktivieren einer Isolationsfunktion und / oder Abschalten eines Umrichters und / oder Konfigurieren des Umrichters zur Erzeugung eines Kurzschlusses der angeschlossenen Phasen,
- Bestimmung einer Stromsprungantwort des Motors.

Erfindungsgemäß wird somit vorzugsweise auf spezialisierte Hardware zur Messung der Dämpfungsfunktion verzichtet und die Dämpfungsfunktion wird durch eine Strommessung, insbesondere durch die Bestimmung einer Stromsprungantwort des Motors bestimmt.

Dies hat den Vorteil, dass vorzugsweise ausschließlich Hardware-Komponenten zum Einsatz kommen, die ohnehin bei dem Aktuator oder Antriebssystem vorhanden sind und auf spezialisierte Hardware verzichtet werden kann.

Gemäß einer Ausführungsform umfasst ein erfindungsgemäßes Verfahren die folgenden Schritte:

- Prüfung, ob die Stromsprungantwort einem Erwartungswert entspricht, vorzugsweise, ob eine definierte Amplitude erreicht wurde, und somit ein voreingestellter Dämpfungswert erreicht ist, wobei die Amplitude des Stromsprungs vereinfacht dargestellt dem folgen Zusammenhang folgt: $I = U / Z$, wobei $U = n * ke$ und $Z = (Rmotor + RDämpfung + jwLMotor)$

Darüber hinaus kann ein erfindungsgemäßes verfahren mindestens einen der nachstehenden Schritte umfassen:

- Bestimmung mindestens eines Motor-Moments mittels einer Bestimmung der Positionsdifferenz zwischen einer Motor-Position und einer Aktuator-Position, und/oder
- Prüfung, ob die Geschwindigkeit mindestens einer erfassten Änderung mindestens eines Motor-Moments einer geforderten Dämpfung auf der Motorebene entspricht, und/oder
- Bestimmung einer mit der Aktivierung der Dämpfungsfunktion einhergehenden Drehzahländerung und / oder Bestimmung einer Zeit bis zum Eintritt einer definierten Geschwindigkeitsänderung und / oder Bestimmung einer Zeit bis zum Stillstand des Motors.

Aus dem bestimmten, mindestens einen Motor-Moment kann eine charakteristische Motorgleichung erzeugt werden.

Vorzugsweise umfasst ein erfindungsgemäßes Verfahren weiterhin den Schritt:

- Ausführen einer Parameteridentifikation, insbesondere der Parameter L, R, kt mittels einer vorzugsweise auf der Grundlage des mindestens einen Motor-Moment erzeugten charakteristischen Motorgleichung oder mittels eines Beobachtermodells.

Alternativ oder zusätzlich kann ein erfindungsgemäßes Verfahren den folgenden Schritt aufweisen:

- Bestimmung eines Phasenwiderstands des Motors im Stillstand und Korrektur des Phasenwiderstands des Motors, wenn der Phasenwiderstand des Motors von einem Sollwert oder Toleranzbereich abweicht.

Ein Vorteil eines erfindungsgemäßen Verfahrens besteht darin, dass das Verfahren keiner speziellen, für die Ausführung des Verfahrens designierten Hardware bedarf.

Ein anderer Aspekt der vorliegenden Erfindung betrifft ein Antriebssystem für einen Aktuator, umfassend eine Steuereinheit, welche dazu ausgelegt ist, ein Verfahren gemäß der vorliegenden Erfindung auszuführen.

Weiterhin betrifft die vorliegende Erfindung einen Elektromechanischer Aktuator mit einem Antriebssystem gemäß der vorliegenden Erfindung.

Darüber hinaus betrifft die vorliegende Erfindung ein Luftfahrzeug mit einem Antriebssystem und / oder einem elektromechanischen Aktuator gemäß der vorliegenden Erfindung.

Nachstehend werden ein Antriebssystem und ein Aktuator, im Rahmen dessen die vorliegende Erfindung vorzugsweise zum Einsatz kommen kann, ausführlicher beschrieben.

Das erfindungsgemäße Antriebssystem für einen Aktuator, insbesondere einen elektromechanischen Aktuator zum Einsatz in einem Luftfahrzeug, umfasst vorzugsweise einen elektrischen Motor zum Ausgeben eines Drehmoments für das Betätigen des Aktuators, eine erste Antriebselektronik, die dazu ausgelegt ist, elektrische Leistung an einen Motoranschluss zum Antreiben des elektrischen Motors bereitzustellen, eine zweite Antriebselektronik, die dazu ausgelegt ist, elektrische Leistung an den Motoranschluss zum Antreiben des elektrischen Motors bereitzustellen, eine erste Isoliervorrichtung, die in einer Verbindung zwischen der ersten Antriebselektronik und dem Motoranschluss vorgesehen ist und in einem aktiven Zustand die erste Antriebselektronik von dem Motoranschluss elektrisch isoliert, eine zweite Isoliervorrichtung, die in einer Verbindung zwischen der zweiten Antriebselektronik und dem Motoranschluss vorgesehen ist und in einem aktiven Zustand die zweite Antriebselektronik von dem Motoranschluss elektrisch isoliert, und eine Dämpfungseinheit, die über den Motoranschluss mit dem elektrischen Motor verbunden ist und dazu dient, bei Bedarf einen Bewegungswiderstand des elektrischen Motors zu erhöhen, wobei die erste Antriebselektronik und die zweite Antriebselektronik zueinander redundant sind, und die Dämpfungseinheit dazu ausgelegt ist, den Zustand der ersten Isoliervorrichtung und den Zustand der zweiten Isoliervorrichtung zu erfassen und eine Dämpfung des elektrischen Motors zu bewirken, wenn beide Isoliervorrichtungen sich in ihrem aktiven Zustand befinden.

Es ist somit vorzugsweise vorgesehen, dass es eine erste Antriebselektronik und eine zweite Antriebselektronik gibt, die zueinander redundant ausgebildet sind. Dabei ist die erste Antriebselektronik bzw. die zweite Antriebselektronik dazu ausgebildet, den elektrischen Motor zu regeln, sodass das Antriebssystem in Bezug auf den elektrischen Teil des Antriebsstrangs durch Duplikation der entsprechenden Bestandteile redundant aufgebaut ist.

Neben diesem redundanten Aufbau ist darüber hinaus auch noch eine Dämpfungseinheit vorgesehen, die den elektrischen Motor in seiner Bewegung dämpft, wenn weder die erste Antriebselektronik noch die zweite Antriebselektronik dazu in der Lage ist, den Motor über eine entsprechende elektrische Leistungsabgabe an den Motoranschluss zu steuern bzw. zu regeln.

Die Dämpfungseinheit ist dabei mit Sensoren ausgestattet, die den aktiven oder inaktiven Zustand einer jeweiligen zu einer Antriebselektronik zugeordneten Isoliervorrichtung überprüfen.

Befindet sich sowohl die erste Isoliervorrichtung, die der ersten Antriebselektronik zugeordnet ist, wie auch die zweite Isoliervorrichtung, die der zweiten Antriebselektronik zugeordnet ist, in einem aktiven Zustand, sind also beide Antriebselektroniken elektrisch gegenüber dem Motoranschluss isoliert und können demnach nicht den Motor regeln, bewirkt die Dämpfungseinheit eine Dämpfung des elektrischen Motors, um Schwingungen des mit dem Aktuator zu steuernden Elements zu verhindern.

Vorteilhaft hieran ist, dass in dem erfindungsgemäßen Antriebssystem auch der Fall betrachtet wird, wenn beide redundanten Antriebselektroniken nicht mehr dazu in der Lage sind, den elektrischen Motor zu regeln. Für diesen Fall übernimmt die Dämpfungseinheit und sorgt für ein Dämpfen des elektrischen Motors, sodass Schwingungen des von dem Aktuator betätigten Element unterdrückt werden.

Die erste Isoliervorrichtung und die zweite Isoliervorrichtung können nach einer optionalen Fortbildung der vorliegenden Erfindung jeweils durch einen Schalter, beispielsweise einen Umrichter, umgesetzt werden, der die elektrische Verbindung zwischen der zugehörigen Antriebselektronik und dem Motoranschluss des elektrischen Motors bei Bedarf unterbricht.

Dadurch wird sichergestellt, dass dann, wenn eine Antriebseinheit fehlerhafte Signale zum Regeln des elektrischen Motors ausgibt, diese nicht mehr zum Motoranschluss übertragen werden.

Darüber hinaus ist das Vorsehen der Isoliervorrichtung vorteilhaft, da auch die nicht in Betrieb befindliche Antriebselektronik, die nur bei einem Fehlerfall der in Betrieb befindlichen Antriebselektronik zum Einsatz kommt, mithilfe der Isoliervorrichtung von etwaigen Rückkopplungen der ersten Antriebselektronik bzw. des Motoranschlusses geschützt ist.

Schließlich wird die Isoliervorrichtung der nicht zum Betreiben des Motors genutzten Antriebselektronik ebenfalls mithilfe eines Schalters, beispielsweise Umrichters, oder dergleichen von dem Motoranschluss elektrisch getrennt bzw. isoliert.

Nach einer vorteilhaften Ausgestaltung der vorliegenden Erfindung kann demnach vorgesehen sein, dass die erste Isoliervorrichtung und die zweite Isoliervorrichtung so ausgelegt sind, dass mindestens eine von der ersten Antriebselektronik und der zweiten Antriebselektronik von dem Motoranschluss elektrisch isoliert ist. Wie oben bereits ausgeführt, kann die Umsetzung der elektrischen Isoliervorrichtung durch einen Schalter als vorteilhaft angesehen werden.

Nach einer weiteren optionalen Fortbildung der vorliegenden Erfindung kann vorgesehen sein, dass die erste Antriebselektronik und die zweite Antriebselektronik jeweils dazu ausgelegt sind, zwischen einem aktiven Modus zum Regeln des elektrischen Motors und einem Kontrollmodus zum Überwachen des Antriebssystems, insbesondere des elektrischen Motors und/oder der anderen Antriebselektronik zu wechseln, wobei der Kontrollmodus dazu dient, einen fehlerfreien Zustand zu überwachen.

Dabei ist vorteilhafterweise eine der beiden Antriebselektroniken in einem aktiven Modus und die andere der beiden Antriebselektroniken in einem Kontrollmodus, sodass nicht der Fall eintritt, dass beide Antriebselektroniken gleichzeitig Signale an den elektrischen Motor senden.

Mindestens eine der beiden Antriebselektroniken ist mithilfe der beiden Isoliervorrichtungen von dem elektrischen Motor elektrisch isoliert, sodass ein gleichzeitiges Senden von Steuersignalen an den Motoranschluss nicht möglich ist.

Dabei kann vorteilhafterweise vorgesehen sein, dass die erste Antriebselektronik und die zweite Antriebselektronik im Kontrollmodus jeweils dazu ausgelegt sind, bei einem Detektieren eines fehlerhaften Zustands die Isoliervorrichtung der anderen Antriebselektronik zu aktivieren, und in den aktiven Modus zu wechseln, um die Regelung des elektrischen Motors zu übernehmen.

In einem Kontrollmodus ist zwar die im Kontrollmodus befindliche Antriebselektronik durch einen aktiven Zustand der Isoliervorrichtung elektrisch von dem elektrischen Motor getrennt, jedoch erhält jede der beiden Antriebselektroniken die gleichen Eingangssignale, unabhängig davon, in welchem Modus sich die Antriebselektronik befindet, sodass eine im Kontrollmodus befindliche Antriebselektronik die im aktiven Modus befindliche Antriebselektronik überwachen kann.

Dazu wird bspw. verglichen, welche Signale die im aktiven Modus befindliche Antriebselektronik ausgibt und überprüft, ob dies mit den Signalen übereinstimmt, die die im Kontrollmodus befindliche Antriebselektronik auf Grundlage der erhaltenen Eingangssignale ausgegeben hätte. Gibt es hierzu eine Abweichung kann die im Kontrollmodus befindliche Antriebselektronik einen Wechsel in den aktiven Modus anstreben, wobei zunächst die Isoliervorrichtung der als fehlerhaft erachteten Antriebselektronik in den aktiven Zustand versetzt wird und die Isoliervorrichtung der noch im Kontrollmodus befindlichen Antriebselektronik deaktiviert wird, sodass die vormals elektrisch isolierte Antriebselektronik nun mit dem Motoranschluss des elektrischen Motors verbunden ist.

Hat also eine im Kontrollmodus befindliche Antriebselektronik einen Fehler der im aktiven Modus befindlichen Antriebselektronik erkannt, kann ein Moduswechsel der im Kontrollmodus befindlichen Antriebselektronik durchgeführt werden, der gleichzeitig dazu führt, dass die als fehlerbehaftet angesehene Antriebselektronik durch Überführen der Isoliervorrichtung in den aktiven Zustand von der Regelung des elektrischen Motors abgezogen wird.

Nach einer weiteren optionalen Modifikation der vorliegenden Erfindung kann vorgesehen sein, dass die erste Antriebselektronik und die zweite Antriebselektronik im aktiven Modus jeweils dazu ausgelegt sind, sich selbst zu überwachen und bei einem Feststellen eines fehlerhaften Zustands die zugehörige Isoliervorrichtung zu aktivieren.

Vorteilhafterweise kann bei einem selbst detektierten Fehlerzustand einer Antriebselektronik auch ein Signal an die andere Antriebselektronik zum Übernehmen der Regelung des elektrischen Motors gesendet werden, sodass die eigentlich sich im Kontrollmodus befindliche Antriebselektronik die Steuerung des Motors übernimmt. Hat die andere Antriebselektronik aber bei sich ebenfalls einen Fehler detektiert oder wurde ein Fehler durch eine übergeordnete Kontrollinstanz entdeckt, ist es möglich, dass die andere Antriebselektronik dieser Aufforderung nicht nachkommt, sodass der Zustand eintritt, in welchem beide Antriebselektroniken durch ihre zugehörige Isoliervorrichtung elektrisch von dem Motor getrennt sind, sodass diesem keine elektrische Leistung zugeführt wird.

Ein solcher Zustand wird durch die Dämpfungseinheit detektiert, die daraufhin eine Dämpfung des elektrischen Motors bewirkt. So wird also auch für den Fall vorgesorgt, dass beide redundant zueinander ausgebildeten Antriebselektroniken versagen bzw. einen nicht vollständig fehlerfreien Zustand einnehmen, es aber dennoch nicht zu einem ungedämpften Zustand eines mit dem erfindungsgemäßen Antriebssystem versehenen elektromechanischen Aktuators kommt, da der den Aktuator antreibende elektrischen Motor durch die Dämpfungseinheit gedämpft wird.

Nach einer vorteilhaften Fortbildung der vorliegenden Erfindung kann vorgesehen sein, dass die erste Antriebseinheit und die zweite Antriebseinheit mit identischen Eingangssignalen zum Ansteuern des elektrischen Motors verknüpft sind, die in einem Kontrollmodus dazu verwendet werden, die andere im aktiven Modus befindliche Antriebseinheit zu überwachen, insbesondere durch Abgleichen einer Motordrehzahl, und/oder eines von der anderen Antriebseinheit an den Motoranschluss gelieferten Stromwerts und/oder Spannungswerts.

Die aufgrund der redundanten Auslegung vorgehaltene Antriebselektronik wird also auch dann mit den Eingangssignalen zum Ansteuern der Antriebselektronik versorgt, wenn eine Ausgabe der Signale an den elektrischen Motor tatsächlich nicht vorgesehen ist, da die andere Antriebselektronik dies übernimmt.

Dies hat den Hintergrund, dass das Zuleiten der Eingangssignale an die redundant vorgehaltene Antriebselektronik dazu genutzt wird, die andere Antriebselektronik zu überwachen. Dabei werden also die Eingangssignale so verarbeitet, als wäre die redundant vorgehaltene Antriebselektronik tatsächlich mit dem elektrischen Motor in Verbindung, sodass ein Abgleich erfolgen kann, ob die von der redundant vorgehaltenen Antriebselektronik erzeugten Steuersignale für den Motor von den Steuersignalen der anderen Antriebselektronik abweichen.

Ist dies der Fall, kann die redundant vorgehaltene Antriebselektronik den Kontrollmodus verlassen und in den aktiven Modus wechseln, wobei die andere Antriebselektronik durch das Überführen der zugehörigen Isoliervorrichtung (durch Signalisierung von der anderen Antriebselektronik) in den aktiven Zustand von einer Verbindung mit dem elektrischen Motor getrennt wird.

Nach einer weiteren optionalen Fortbildung der vorliegenden Erfindung kann vorgesehen sein, dass in einem fehlerfreien Zustand des Antriebssystems eine Antriebselektronik sich in dem aktiven Modus und die andere Antriebselektronik sich in dem Kontrollmodus befindet.

Dies entspricht einen normalen Zustand des erfindungsgemäßen Antriebssystems, da eine der beiden Antriebselektroniken tatsächlich die Signale generiert, die dem elektrischen Motor zugeführt werden, und die andere Antriebselektronik redundant vorgehalten wird und ihre Verbindung zum Motoranschluss des elektrischen Motors mithilfe der Isoliervorrichtung unterbrochen ist.

Nach einer vorteilhaften Ausgestaltung der vorliegenden Erfindung kann vorgesehen sein, dass der Motoranschluss mehrere Leitungen umfasst, die mit einer jeweiligen Phase des elektrischen Motors verbunden sind.

Typischerweise ist jede der beiden Antriebselektroniken dazu ausgelegt, für jede Phase des Motors ein spezifisches Leistungssignal auszugeben, vorzugsweise ein solches, das einen spezifische Stromwert und einen spezifischen Spannungswert besitzt.

Vorteilhafterweise kann nach der Erfindung vorgesehen sein, dass der elektrische Motor ein Permanentmagnet-Synchronmotor oder ein bürstenloser Gleichstrommotor ist. Die Kommutation des elektrischen Motors entspricht dabei einer standardmäßigen Kommutation.

Nach einer weiteren vorteilhaften Ausgestaltung der vorliegenden Erfindung kann dabei vorgesehen sein, dass die Dämpfungseinheit dazu ausgelegt ist, die Phasen des Motors kurzzuschließen, um einen Widerstand gegen eine Drehbewegung des Motors zu erzeugen. Dies bewirkt eine einfache Umsetzung einer Dämpfung bei der Bewegung des Motors.

Weiter kann nach einer vorteilhaften Fortbildung der vorliegenden Erfindung vorgesehen sein, dass die Dämpfungseinheit dazu ausgelegt ist, die Phasen des Motors auf eine elektrische oder elektronische Last zu schalten, um einen Widerstand gegen eine Drehbewegung des Motors zu erzeugen. Dies bewirkt ebenfalls eine einfache Umsetzung einer Dämpfung bei der Bewegung des Motors.

Darüber hinaus kann nach einer vorteilhaften Ausgestaltung der vorliegenden Erfindung vorgesehen sein, dass die Dämpfungseinheit in dem elektrischen Motor integriert ist.

Die Erfindung betrifft zudem einen elektromechanischen Aktuator mit einem Antriebssystem nach einem der vorhergehend diskutierten Aspekte.

Dabei kann nach einer optionalen Ausgestaltung der vorliegenden Erfindung vorgesehen sein, dass der Aktuator für den Einsatz in einer primären Flugsteuerung eines Luftfahrzeugs ausgebildet ist.

So kann der Aktuator bspw. zum Betätigen einer Luftleitfläche eines Luftfahrzeugs dienen, sodass die Vorteile des erfindungsgemäßen Antriebssystems hier besondere Wirkung entfalten.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand der in den Zeichnungen dargestellten Ausführungsbeispiele näher erläutert. Gleiche Bezugszeichen bezeichnen gleiche oder ähnliche Bauteile.

Es zeigen:

Figur 1:    eine schematische Ansicht eines Antriebssystems, auf welches die vorliegende Erfindung anwendbar ist;

Figur 2:    eine schematische Ansicht eines erfindungsgemäßen Antriebssystems,

Figur 3:    eine schematische Ansicht eines anderen erfindungsgemäßen Antriebssystems, und

Figur 4:    eine beispielhafte Ansicht einer erfassten Stromsprungantwort, welche die Dämpfungsfunktion widerspiegelt.

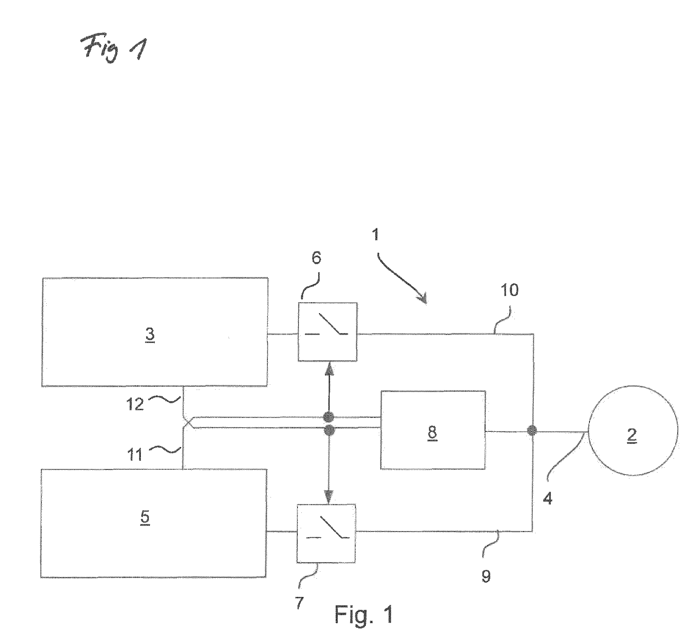

In Fig. 1 erkennt man den elektrischen Motor 2, der zum Betätigen eines Aktuators dient. Darüber hinaus ist eine erste Antriebselektronik 3 sowie eine zweite Antriebselektronik 5 vorgesehen, die jeweils zueinander redundant ausgebildet sind. Jede der beiden Antriebselektroniken 3, 5 wird dabei über (nicht dargestellte) Eingangssignale angesteuert, die bspw. die Position eines Reglers abfühlen, um eine der Reglerposition entsprechende Steuerung des mit dem elektrischen Motor 2 in Verbindung stehenden Aktuators zu bewirken.

Hierzu ist jede der beiden Antriebselektroniken 3, 5 mit einem Motoranschluss 4 des elektrischen Motors 2 verbunden. Um dabei die Anzahl an Leitungen gering zu halten, ist der elektrische Motoranschluss 4 nur einmal vorhanden und kann von jeder der beiden Antriebselektroniken 3, 5 entsprechende Signale zum Regeln des elektrischen Motors 2 empfangen. Demnach wird ein Signal zum Ansteuern des elektrischen Motors 2 von der ersten Antriebselektronik 3 über eine Leitung 10 gesendet, die mit einer Leitung 9 verbunden ist, die zum Ansteuern des elektrischen Motors 2 von der zweiten Antriebselektronik 5 verwendet wird.

Damit es nun aber nicht zu einer divergierenden oder einer doppelten Ansteuerung des elektrischen Motors 2 über den Motoranschluss 4 kommt, sind in jeder der Leitungen 9, 10 eine Isoliervorrichtung 6, 7 vorgesehen, die dazu ausgelegt ist, die zugehörige Antriebselektronik 3, 5 elektrisch zu isolieren. Dies kann bspw. durch das Vorsehen eines Schalters umgesetzt werden, der in seine geöffnete Stellung überführt wird, sodass es zu einem Isolieren der zugehörigen Antriebselektronik 3, 5 kommt.

Im Regelbetrieb ist eine der beiden Antriebselektroniken 3, 5 dafür verantwortlich, den elektrischen Motor 2 zu regeln, sodass von der zur Regelung des elektrischen Motors 2 verantwortlichen Antriebselektronik 3, 5 entsprechende Ansteuersignale an den Motoranschluss 4 des elektrischen Motors 2 übersendet werden müssen. Dabei ist also vorgesehen, dass eine der beiden Isoliervorrichtungen 6, 7 in ihrem inaktiven Zustand ist, der ein Leiten von einer zugehörigen Antriebselektronik 3, 5 ausgegebene Signale an den Motoranschluss 4 zulässt.

Die andere Antriebselektronik 3, 5, deren zugehörige Isoliervorrichtung 6, 7 in ihrem aktiven Zustand ist, kann demnach nicht auf den elektrischen Motor 2 einwirken, da die eigentlich zum Leiten an den Motoranschluss 4 gedachten Signale aufgrund der Isoliervorrichtung und der damit erfolgten elektrischen Isolierung nicht weitergereicht werden.

Darüber hinaus erkennt man noch die mit dem Bezugszeichen 8 versehene Dämpfungseinheit, welche ebenfalls mit dem Motoranschluss 4 des elektrischen Motors 2 verbunden ist. Diese kann bei Bedarf die unterschiedlichen Phasen des elektrischen Motors 2 miteinander kurzschließen oder diese über eine elektrische oder eine elektronische Last miteinander verbinden, was eine Dämpfung des elektrischen Motors 2 bewirkt.

Dabei ist die Dämpfungseinheit dazu ausgelegt, den Zustand der beiden Isoliervorrichtungen 6, 7 zu erfassen und in Abhängigkeit davon eine Dämpfung des elektrischen Motors 2 zu bewirken. Eine Dämpfung des Motors 2 wird nur dann vorgenommen, wenn der Zustand detektiert wird, dass beide Isoliervorrichtungen 6, 7 sich in ihrem aktiven Zustand befinden, was bedeutet, dass weder die erste Antriebselektronik 3 noch die zweite Antriebselektronik 5 eine elektrische Verbindung zu dem Motoranschluss 4 des Motors 2 besitzt, der Motor 2 also keine Steuersignale erhält. Um nun vorzubeugen, dass es aufgrund äußerer Einwirkungen, bspw. einer Luftströmung an einem Luftleitelement eines elektromechanischen Aktuators, der mit dem erfindungsgemäßen Antriebssystem versehen ist, zu unerwünschten Schwingungen kommt, welche eine Beschädigung von Komponenten des Antriebssystems oder gar benachbarter Komponenten in der eingebundenen Struktur des Antriebssystems hervorrufen können, wirkt die Dämpfereinheit dämpfend auf den Motor 2 ein.

Weiter erkennt man die Leitungen 11, 12, die von einer Antriebselektronik 3, 5 zu der Isoliervorrichtung 6, 7 der anderen Antriebselektronik 3, 5 verlaufen. Da klar ist, dass nicht beide Antriebselektroniken 3, 5 gleichzeitig Steuersignale an einen Motoranschluss 4 des Motors 2 senden können, gibt es eine Antriebselektronik 3, 5, die sich in einem aktiven Zustand befindet und eine andere Antriebselektronik 3, 5, die sich in einem sogenannten Kontrollmodus befindet.

In diesem Kontrollmodus wird die Antriebselektronik 3, 5 mithilfe der zugehörigen Isoliervorrichtung 6, 7 elektrisch von dem Motoranschluss 4 isoliert, sodass etwaige Ausgaben der Antriebselektronik 3, 5 nicht an dem Motoranschluss 4 weitergereicht werden. Eine jede der beiden Antriebselektroniken 3, 5 ist aber dazu in der Lage, in dem Kontrollmodus das Antriebssystem zu überwachen, insbesondere die sich im aktiven Modus befindende Antriebselektronik 3, 5, den elektrischen Motor 2 oder dessen Parameter, wie Rotationsgeschwindigkeit, Drehmomente oder dergleichen oder auch die von der im aktiven Zustand befindlichen Antriebselektronik 3, 5 ausgegebenen Ansteuersignale zu überwachen.

Stellt die im Kontrollmodus befindliche Antriebselektronik 3, 5 eine Abweichung zu den von ihr als richtig angesehenen Werten dar, kann die im Kontrollmodus befindliche Antriebselektronik 3, 5 einen Wechsel in den aktiven Modus anstreben und gleichzeitig die vormals im aktiven Modus befindliche Antriebselektronik 3, 5 von der Steuerung des elektrischen Motors 2 abziehen. Dies gelingt dadurch, dass die im Kontrollmodus befindliche Antriebselektronik 3, 5 die Isoliervorrichtung 6, 7 der anderen Antriebselektronik 3, 5 aktiviert, und die andere Isoliervorrichtung 6, 7 deaktiviert, sodass nun die vormals im Kontrollmodus befindliche Antriebselektronik 3, 5 eine Ansteuerung des Motors 2 übernehmen kann.

Werden hingegen bei beiden Antriebselektroniken 3, 5 Fehler erkannt, entweder durch sich selbst, eine übergeordnete Kontrollinstanz und/oder die andere Antriebselektronik 3, 5, steht keine der beiden Antriebselektroniken 3, 5 für eine Ansteuerung des elektrischen Motors 2 zur Verfügung, sodass die Dämpfungseinheit 8 einen aktiven Zustand der beiden Isoliervorrichtung in 6, 7 erfasst und eine Dämpfung des Motors 2 bewirkt.

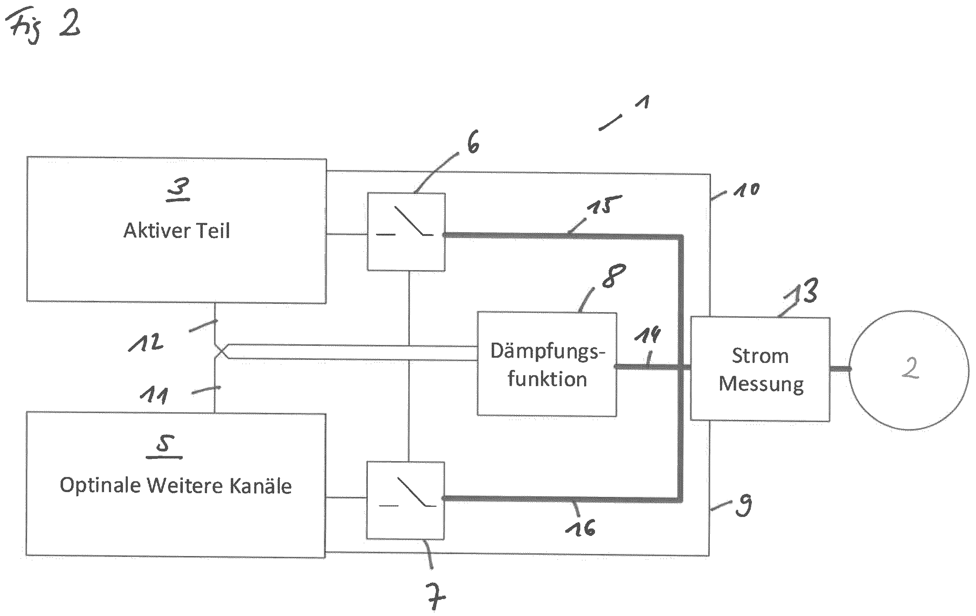

In Fig. 2 ist zusätzlich zu den aus Fig. 1 bekannten Komponenten ein Mittel 13 zur Strommessung gezeigt. Das Mittel 13 zur Strommessung ist über eine Leitung 14 mit der Dämpfungseinheit (auch als Dämpfungsfunktion bezeichnet) 8 verbunden. Der Strom zur Regelung des Motors als auch der Strom über die Dämpfungsfunktion werden durch das Mittel 13 allen Kanälen, beispielsweise der Einheiten 3 und 5, zur Verfügung gestellt.

Auch die Isoliervorrichtungen 6 und 7 bzw. Umrichter sind mittels Leitungen 15 und 16 mit der Leitung 14 und somit mit dem Mittel 13 zur Strommessung gekoppelt.

Eine nicht gezeigte Steuereinheit kann dazu ausgelegt sein, die Motorinduktivität im Stillstand auf der Grundlage der nachstehenden Zusammenhänge zu bestimmen und ggf. eine und Korrektur der Motorinduktivität auszuführen.

$$i_d = -\frac{L_q \cdot \omega^2 \cdot k_t \cdot p}{R^2 + L_d \cdot L_q \cdot \omega^2 \cdot p^2} \qquad i_q = -\frac{R \cdot \omega \cdot k_t}{R^2 + L_d \cdot L_q \cdot \omega^2 \cdot p^2}$$

Aus dem Zusammenhang:

$$I_K = \frac{U_{EMF}}{Z_{sp}} \qquad U_{EMF} = \frac{\omega_e \cdot k_e}{z_p} \qquad Z_{sp} = \sqrt{R^2 + (\omega_e L)^2}$$

folgt zudem für den Kurzschlussstrom:

$$I_K = \frac{\omega_e \cdot k_e}{z_p} \frac{1}{\sqrt{(R_{motor} + R_{damp})^2 + (\omega_e L)^2}}$$

$\omega_e$ = Elektrische Frequenz des Motors

Der Grenzwert für I für w gegen unendlich ergibt sich wie folgt:

$$\lim_{\omega_e \to \infty} I_K{}^2 = \lim_{\omega_e \to \infty} \frac{\omega_e{}^2 \cdot k_e{}^2}{z_p{}^2 \cdot (R^2 + \omega_e{}^2 L^2)} = \frac{k_e{}^2}{z_p{}^2 \cdot L^2}$$

$$I_K(\omega_e \to \infty) = \frac{k_e}{z_p \cdot L}$$

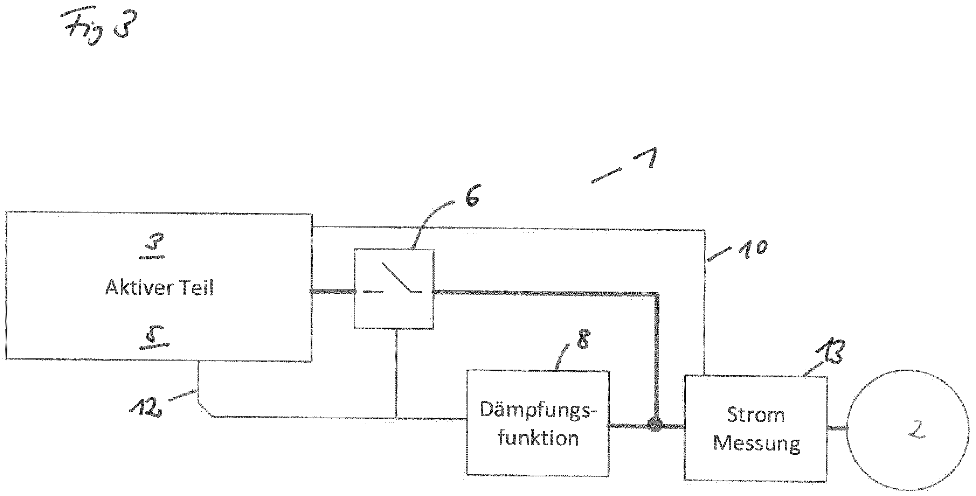

Wie in Fig. 3 gezeigt, ist die zweite Antriebselektronik 5 grundsätzlich optional und es kann auch nur eine erste Antriebselektronik 3 vorgesehen sein.

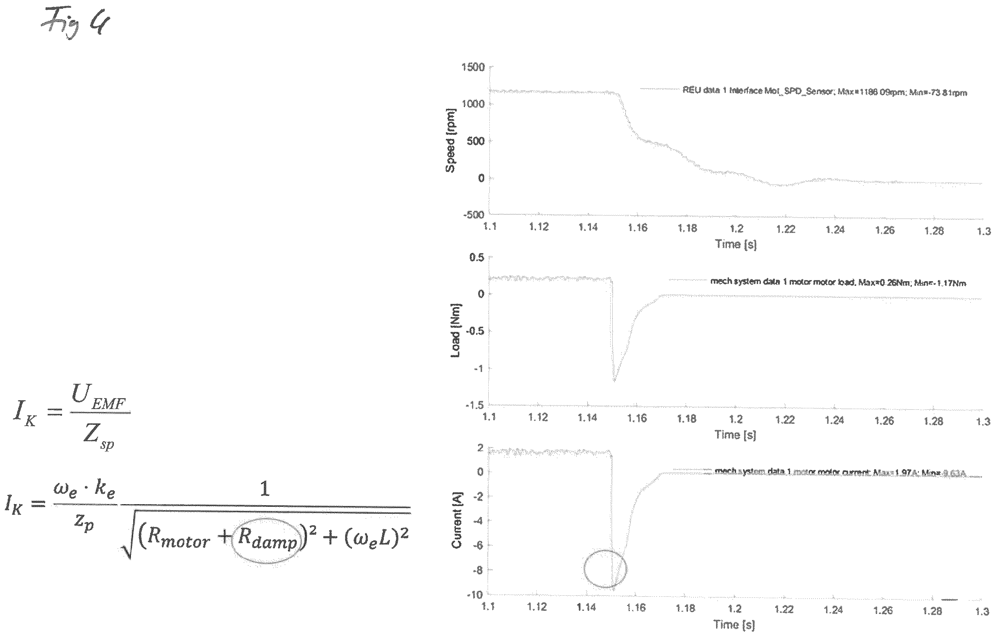

Fig. 4 zeigt eine beispielhafte Ansicht einer erfassten Stromsprungantwort, welche die Dämpfungsfunktion widerspiegelt.

In dem untersten Panel ist der die Stromsprungantwort abbildende Bereich mit einem Kreis kenntlich gemacht. Diese steht in Zusammenhang zum Widerstand der Dämpfereinheit $R_{damp}$ in der nebenstehenden Gleichung und erlaubt somit Rückschlüsse auf die Dämpferfunktion.

1 Antriebssystem
2 elektrischer Motor
3 erste Antriebselektronik
4 Motoranschluss
5 zweite Antriebselektronik
6 erste Isoliervorrichtung
7 zweite Isoliervorrichtung
8 Dämpfungseinheit
9 Leitung(en) zum Ansteuern des Motors der zweiten Antriebselektronik
10 Leitung(en) zum Ansteuern des Motors der ersten Antriebselektronik
11 Leitung der zweiten Antriebselektronik zum Aktivieren der ersten Isoliervorrichtung
12 Leitung der ersten Antriebselektronik zum Aktivieren der zweiten Isoliervorrichtung
13 Mittel zur Strommessung

14 Leitung zwischen Dämpfungseinheit und Mittel zur Strommessung
15 Leitung zwischen erster Isoliervorrichtung und Leitung 14
16 Leitung zwischen zweiter Isoliervorrichtung und Leitung 14

**Patentansprüche**

1. Verfahren zum Messen einer Dämpfungsfunktion, vorzugsweise eines Dämpfers eines elektromechanischen Aktuators oder Antriebssystems, mit den Schritten:

   - Aktives Beschleunigen eines Motors auf eine definierte Geschwindigkeit n,
   - Aktivieren einer Isolationsfunktion und / oder Abschalten eines Umrichters und / oder Konfigurieren des Umrichters zur Erzeugung eines Kurzschlusses der angeschlossenen Phasen
   und
   - Bestimmung einer Stromsprungantwort des Motors.

2. Verfahren gemäß Anspruch 1, weiterhin mit den Schritten:

   - Prüfung, ob die Stromsprungantwort einem Erwartungswert entspricht, vorzugsweise, ob eine definierte Amplitude erreicht wurde, und somit ein voreingestellter Dämpfungswert erreicht ist.

3. Verfahren gemäß Anspruch 1 oder 2, weiterhin mit den Schritten:

   - Bestimmung mindestens eines Motor-Moments mittels einer Bestimmung der Positionsdifferenz zwischen einer Motor-Position und einer Aktuator-Position, und
   - Prüfung, ob die Geschwindigkeit mindestens einer erfassten Änderung mindestens eines Motor-Moments einer geforderten Dämpfung auf der Motorebene entspricht und/oder
   - Bestimmung einer mit der Aktivierung der Dämpfungsfunktion einhergehenden Drehzahländerung und / oder Bestimmung einer Zeit bis zum Eintritt einer definierten Geschwindigkeitsänderung und / oder Bestimmung einer Zeit bis zum Stillstand des Motors.

4. Verfahren gemäß einem der vorhergehenden Ansprüche, weiterhin mit dem Schritt:

   - Ausführen einer Parameteridentifikation, insbesondere der Parameter L, R, kt mittels einer erzeugten charakteristischen Motorgleichung oder ein Beobachtermodell.

5. Verfahren gemäß einem der Ansprüche 1 bis 3, weiterhin mit dem Schritt:

   - Bestimmung eines Phasenwiderstands des Motors im Stillstand und Korrektur des Phasenwiderstands des Motors, wenn der Phasenwiderstand des Motors von einem Sollwert oder Toleranzbereich abweicht.

6. Verfahren gemäß einem der vorhergehenden Ansprüche, **dadurch gekennzeichnet, dass** das Verfahren keiner speziellen, für die Ausführung des Verfahrens designierten Hardware bedarf.

7. Antriebssystem für einen Aktuator, umfassend eine Steuereinheit, welche dazu ausgelegt ist, ein Verfahren gemäß einem der vorhergehenden Ansprüchen auszuführen.

8. Elektromechanischer Aktuator mit einem Antriebssystem gemäß Anspruch 7.

9. Luftfahrzeug mit einem Antriebssystem nach Anspruch 7 und / oder einem elektromechanischen Aktuator nach Anspruch 8.

*Fig 1*

Fig. 1

Fig 2

Strom Messung

Dämpfungs-funktion

Aktiver Teil

Optionale Weitere Kanäle

Fig 3

Aktiver Teil

3

5

Strom Messung

Dämpfungs-funktion

1

10

13

8

9

12

2

Fig 4

EP 4 708 666 A1

12

$$I_K = \frac{U_{EMF}}{Z_{sp}}$$

$$I_K = \frac{\omega_e \cdot k_e}{z_p} \cdot \frac{1}{\sqrt{(R_{motor} + R_{damp})^2 + (\omega_e L)^2}}$$

**EUROPÄISCHER RECHERCHENBERICHT**

Nummer der Anmeldung

EP 25 19 1273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H08 33195 A (YASKAWA ELECTRIC CORP) 2. Februar 1996 (1996-02-02) | 1,2,4-8 | INV. H02P3/22 |
| Y | * Absatz [0001] - Absatz [0007]; Abbildungen 1-3 * | 3,9 | G01R19/00 H02H3/13 |
| | ----- | | H02H7/10 |
| X | JP 2020 058209 A (FANUC LTD) 9. April 2020 (2020-04-09) * Absatz [0033] - Absatz [0037]; Abbildungen 2-5 * | 1,7,8 | B64C13/50 |
| | ----- | | |
| Y | DE 10 2022 108181 B3 (LIEBHERR AEROSPACE LINDENBERG GMBH [DE]) 11. Mai 2023 (2023-05-11) | 9 | |
| A | * Absätze [0012], [0034]; Abbildung 2 * | 1,7,8 | |
| | ----- | | |
| Y | US 2020/274477 A1 (NAKAMURA MAKOTO [JP]) 27. August 2020 (2020-08-27) * Absatz [0049]; Abbildung 5 * | 3 | |
| | ----- | | |

**RECHERCHIERTE SACHGEBIETE (IPC)**

H02P
H02H
G01R
B60V
B64C

Der vorliegende Recherchenbericht wurde für alle Patentansprüche erstellt

| Recherchenort | Abschlußdatum der Recherche | Prüfer |
|---|---|---|
| München | 5. Januar 2026 | Kruip, Stephan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 19 1273

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2026

| Im Recherchenbericht angeführtes Patentdokument | Datum der Veröffentlichung | Mitglied(er) der Patentfamilie | Datum der Veröffentlichung |
|---|---|---|---|
| JP H0833195 A | 02-02-1996 | JP 3438748 B2<br>JP H0833195 A | 18-08-2003<br>02-02-1996 |
| JP 2020058209 A | 09-04-2020 | CN 111010051 A<br>DE 102019215152 A1<br>JP 2020058209 A<br>US 2020112273 A1 | 14-04-2020<br>09-04-2020<br>09-04-2020<br>09-04-2020 |
| DE 102022108181 B3 | 11-05-2023 | BR 102023006112 A2<br>DE 102022108181 B3<br>FR 3134262 A1<br>GB 2619146 A<br>US 2023318513 A1 | 21-11-2023<br>11-05-2023<br>06-10-2023<br>29-11-2023<br>05-10-2023 |
| US 2020274477 A1 | 27-08-2020 | CN 111614304 A<br>JP 7129930 B2<br>JP 2020137327 A<br>US 2020274477 A1 | 01-09-2020<br>02-09-2022<br>31-08-2020<br>27-08-2020 |

EPO FORM P0461

Für nähere Einzelheiten zu diesem Anhang : siehe Amtsblatt des Europäischen Patentamts, Nr.12/82